# EUROPEAN PATENT APPLICATION

(11) **EP 2 680 103 A1**
(43) Date of publication of application: **01.01.2014**
(21) Application number: 12180747.3
(22) Date of filing: 16.08.2012
(51) Int. Cl.: G06F 1/18, H05K 7/00

(54) **Fastening device for hard disk drive**

(30) Priority: 25.06.2012 CN 201210210093
(71) Applicant: Hong Fu Jin Precision Industry (ShenZhen) Co., Ltd., Shenzhen City, Guangdong 518109 (CN); Hon Hai Precision Industry Co., Ltd., Tu-cheng City, Taipei Hsien (TW)
(72) Inventor: Peng, Wen-Tang, Tu-Cheng, New Taipei (TW); Zhou, Hai-Chen, Shenzhen City, Guangdong Province (CN)
(74) Representative: Gray, John James

(57) **Abstract**

A fastening device for a hard disk drive (HDD) includes a tray receiving the HDD. The tray includes a bottom plate and two side plates extending from opposite sides of the bottom plate. A connector is mounted on a first end of the bottom plate and is connected to the HDD. One of the side plates defines a recess near the connector, and longitudinally defines a through slot communicating with the recess for cables of the connector extending through from the access.

## Description

### BackGround

### Technical Field

The present disclosure relates to a device for fastening hard disk drives (HDDs).

### Description of Related Art

In some servers, an HDD tray may carry two or more HDDs. The HDDs are electrically connected to connectors mounted on the tray. Cables of the connectors are electrically connected to an electronic device, such as a backplane, to communicate with a motherboard. However, the cables in the tray are untidy.

### BRIEF DESCRIPTION OF THE DRAWINGS

Many aspects of the present embodiments can be better understood with reference to the following drawings. The components in the drawings are not necessarily drawn to scale, the emphasis instead being placed upon clearly illustrating the principles of the present embodiments. Moreover, in the drawings, all the views are schematic, and like reference numerals designate corresponding parts throughout the several views.

FIG. 1 is an exploded, isometric view of an embodiment of a fastening device together with two hard disk drives, wherein the fastening device includes an engaging member.

FIG. 2 is an enlarged view of a circled portion II of FIG. 1.

FIG. 3 is an enlarged view of the engaging member of FIG. 1.

FIG. 4 is an assembled, isometric view of FIG. 1.

FIG. 5 is a cross-sectional view taken along the line V-V of FIG. 4.

### DETAILED DESCRIPTION

The disclosure, including the accompanying drawings, is illustrated by way of example and not by way of limitation. It should be noted that references to "an" or "one" embodiment in this disclosure are not necessarily to the same embodiment, and such references mean at least one.

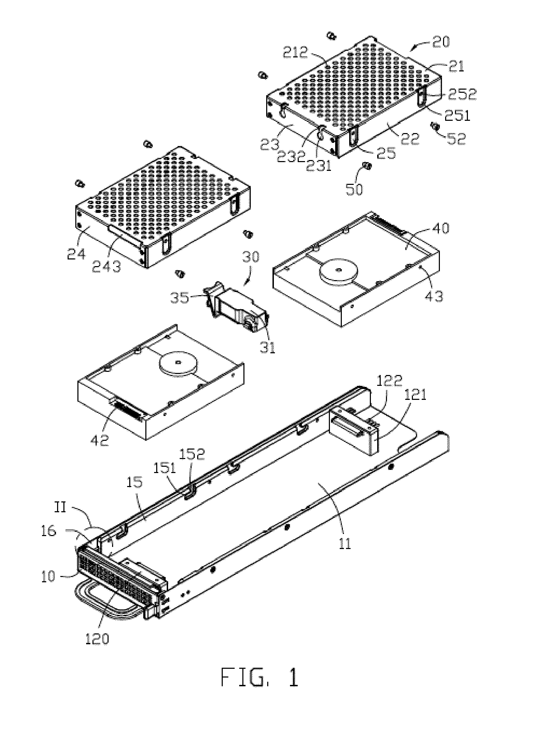

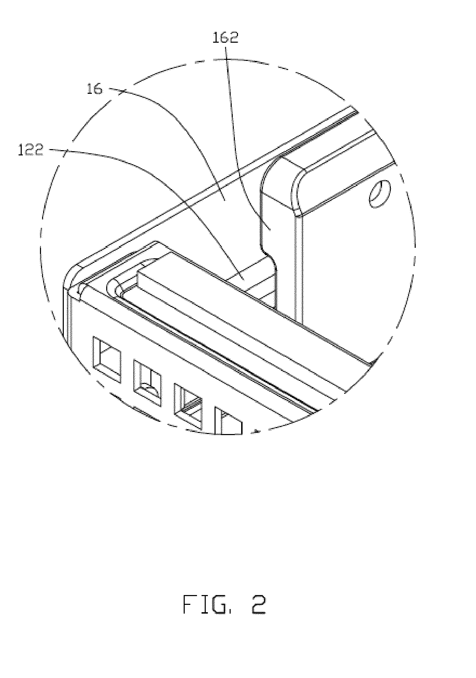

FIGS. 1 and 2 show an embodiment of a fastening device for fastening two hard disk drives (HDDs) 40. Two locking holes 43 are defined in each opposite side of each HDD 40. The fastening device includes a tray 10, two brackets 20, an engaging member 30, and a plurality of screws 50 with columnar heads 52.

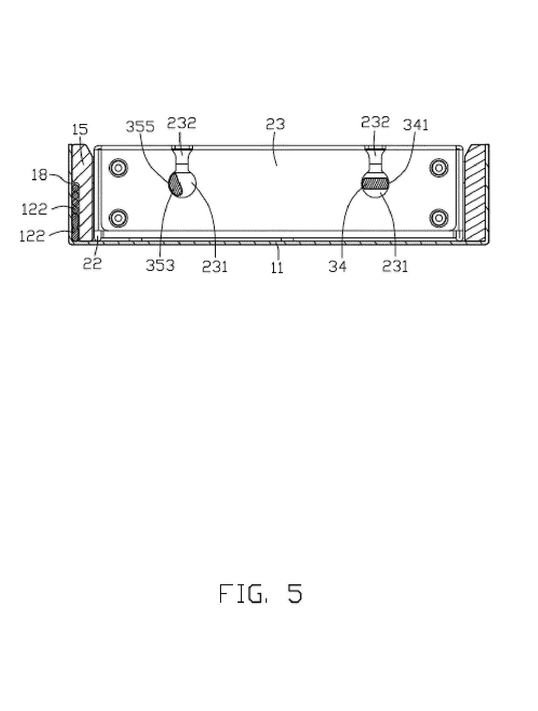

The tray 10 includes a long bottom plate 11 and two opposite side plates 15 extending perpendicularly up from opposite sides of the bottom plate 11. A recess 16 is defined in an inner side of a front end of one of the side plates 15. A through slot 18 (shown in FIG. 5) is defined in the side plate 15, extending through a rear sidewall 162 of the recess 16 and a rear end of the side plate 15. A first connector 120 with a plurality of cables 122 is mounted on a front end of the bottom plate 11. A second connector 121 with a plurality of cables 122 is mounted on a rear end of the bottom plate 11. The cables 122 of the first connector 120 enter the through slot 18 from the recess 16, and extend out of the through slot 18 from the rear end of the side plate 15. The cables 122 of the first connector 120 and second connector 121 are then electrically connected to an electronic device, such as a backplane. A first group of slide slots 151 is defined in front portions of inner sides of the side plates 15, extending forward. A second group of slide slots 151 is defined in rear portions of the inner sides of the side plates 15, extending backward. The side plates 15 define a plurality of accesses 152 respectively communicating with rear ends of the slide slots 151 of the first group in a substantially perpendicular manner and extending through tops of the inner sides of the side plates 15. The side plates 15 define a plurality of accesses 152 respectively communicating with front ends of the slide slots 151 of the second group in a substantially perpendicular manner and extending through tops of the inner sides of the side plates 15. In one embodiment, each group of slide slots 151 has four slide slots 151.

Each bracket 20 includes a top plate 21, two side plates 22 extending perpendicularly down from opposite sides of the top plate 21, and a first end plate 23 and a second end plate 24 extending perpendicularly down from opposite ends of the top plate 21. The top plate 21 defines a plurality of vents 212 for heat dissipation of the HDD 40. Two recesses 25 are depressed inward from each side plate 22. A through hole 252 is defined in a bottom wall 251 of each recess 25. Two through holes 231 are defined in the first end plate 23. Two notches 232 are defined in a junction of the top plate 21 and the first end plate 23, and respectively communicate with top ends of the through holes 231. An opening 243 is defined in a junction of the top plate 21 and the second end plate 24. Connectors 42 of the HDDs 40 can be electrically connected to the first connector 120 and the second connector 121 through the openings 243.

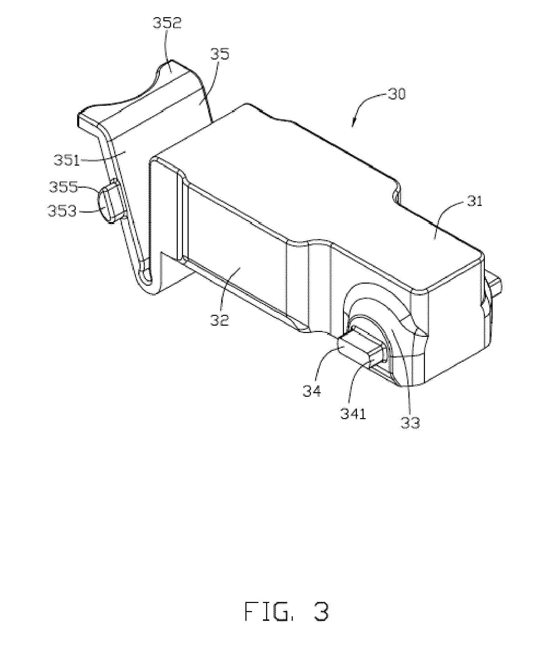

FIG. 3 shows the engaging member 30 including a main body 31 and a resilient portion 35. The main body 31 is hollow, without a bottom wall. Two abutting portions 32 extend out from opposite sides of the main body 31. Two platforms 33 extend from opposite sides of a first end of the main body 31. A substantially rectangular block 34 extends perpendicularly from each platform 33. Opposite end walls 341 of the block 34 are arc-shaped, and the radius of the arc is substantially the same as the radius of the through hole 231. The resilient portion 35 includes an extension plate 351 extending down firstly and then extending slantingly up from a bottom of a second end of the main body 31 opposite to the first end of the main body 31, an operation portion 352 extending from a top of the extension plate 351 away from the main body 31, and two latches 353 formed on opposite sides of the extension plate 351. An arc-shaped abutting wall 355 substantially having the same radius as the through hole 231 is formed on a side of each latch 353 away from the main body 31.

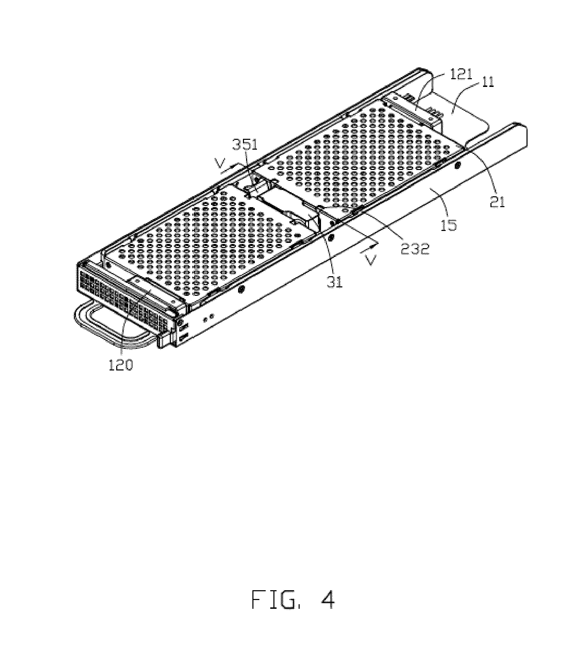

FIGS. 4 and 5 show in assembly, the HDDs 40 are respectively received in the brackets 20. The opposite sides of each HDD 40 abut against the bottom walls 251 of the corresponding bracket 20. A connector 42 of each HDD 40 aligns with the opening 243 of the corresponding bracket 20. The screws 50 respectively extend through the through holes 252 and engage in the locking holes 43. The brackets 20 are manipulated down toward the bottom plate 11, with the first end plates 23 facing each other. The heads 52 of the screws 50 enter the first and second groups of the slide slots 151 through the corresponding accesses 152. The brackets 20 are respectively manipulated forward and backward, to allow the heads 52 of the screws 50 to slide in the first and second groups of the slide slots 151, until the heads 52 of the screws 50 are blocked by blind ends of the first and second groups of the slide slots 151. The connectors 42 of the HDDs 40 are respectively connected to the connectors 12 in the tray 10 through the openings 243.

The engaging member 30 is placed between the first end plates 23 of the brackets 20, with the first end of the main body 31 located at a bottom of the engaging member 30. The engaging member 30 is manipulated down, allowing the blocks 34 to respectively enter the through holes 231 through the notches 232 adjacent to one of the side plates 15. The engaging member 30 is rotated toward the other side plate 15. The blocks 34 are rotated in the corresponding through holes 231, with the end walls 341 of the blocks 34 abutting against sidewalls bounding the corresponding through holes 231. The operation portion 352 is operated to deform the resilient portion 35 toward the main body 31, to allow the latches 353 to respectively slide down in the notches 232 adjacent to the other side plate 15. When the abutting walls 355 completely abut against sidewalls bounding the corresponding through holes 231, the resilient portion 35 is restored. The abutting portions 32 respectively abut against the first end plates 23. Therefore, the HDDs 40 are fastened to the tray 10.

In the embodiment, the cables 122 of the first connector 120 are received in the through slot 18 of the tray 10, thus avoid being placed in the tray 10 untidily.

Even though numerous characteristics and advantages of the embodiments have been set forth in the foregoing description, together with details of the structure and the functions of the embodiments, the disclosure is illustrative only, and changes may be made in details, especially in the matters of shape, size, and arrangement of parts within the principles of the embodiments to the full extent indicated by the broad general meaning of the terms in which the appended claims are expressed.

## Claims

1. A fastening device for a hard disk drive (HDD), the fastening device comprising:
a bottom plate to support the HDD; and
a side plate extending up from the bottom plate, and defining a through slot for cables of a connector mounted on the bottom plate to extend through.

2. The fastening device of claim 1, wherein the through slot extends in a longitudinal direction of the side plate.

3. The fastening device of claim 1, wherein the side plate defines a recess communicating with the through slot, and the cables of the connector enter the through slot from the recess.

4. A fastening device for two hard disk drives (HDDs), the fastening device comprising:
a tray comprising a bottom plate and a first side plate extending from the bottom plate, a first connector mounted on a front end of the bottom plate to be connected to one of the HDDs, and a second connector mounted on a rear end of the bottom plate opposite to the front end to be connected to the other HDD, the first side plate defining a through slot in a fore-and-aft direction for cables of the first connector extending through; and
two brackets respectively accommodating the two HDDs, and supported on the bottom plate of the tray.

5. The fastening device of claim 4, further comprising an engaging member, wherein each bracket comprises a first end plate, the first end plates of the brackets face each other, and the engaging member comprises a first end rotatably mounted to the first end plates, and a second end detachably mounted to the first end plates.

6. The fastening device of claim 5, wherein the first side plate defines a first slide slot extending forward and a second slide slot extending backward, each bracket further comprises a second side plate extending from the first end plate, a front one of the brackets comprises a first protrusion extending out from the second side plate, a rear one of the brackets comprises a second protrusion extending out from the second side plate, the first protrusion is slidably received in the first slide slot, and the second protrusion is slidably received in the second slide slot.

7. The fastening device of claim 6, wherein a first access is defined in the second side plate of the front bracket, and extends through a top of the second side plate of the rear plate, through which the first protrusion enters the first slide slot; a second access is defined in the second side plate of the rear bracket, and extends through a top of the second side plate of the rear bracket, through which the second protrusion enters the second slide slot.

8. The fastening device of claim 6, wherein the engaging member further comprises a main body having a first end rotatably mounted to the first end plates and a second end, a cantilevered extension plate extending slantingly up from the second end of the main body, and two latches formed on opposite sides of the extension plate to detachably engage with the first end plates.

9. The fastening device of claim 8, wherein each bracket further comprises a top plate, each of the first end plates extends down from an end of a corresponding top plate, a first through hole is defined in each of the first end plates, the first through holes of the first end plates align with each other, and two blocks are formed on opposite sides of the first end of the main body, to rotatably engage in the corresponding first through holes.

10. The fastening device of claim 9, wherein the first end of the main body comprises two platforms extending from opposite sides, and the blocks extend from the corresponding platforms.

11. The fastening device of claim 9, wherein opposite end walls of each block are arc-shaped, a radius of each end wall is substantially the same as a radius of each first through hole.

12. The fastening device of claim 9, wherein a junction of each first end plate and the corresponding top plate defines a first notch, the first notch communicates with a top end of a corresponding one of the first through holes, and the blocks enter the first through holes through the corresponding first notches.

13. The fastening device of claim 9, wherein each of the first end plates further defines a second through hole, the second through holes align with each other, and the latches are respectively engaged in corresponding second through holes.

14. The fastening device of claim 13, wherein an arc-shaped abutting wall substantially having the same radius as each of the second through holes is formed on a side of each latch away from the main body, and the abutting walls abut against sidewalls bounding the corresponding second through holes.

15. The fastening device of claim 13, wherein a junction of each first end plate and the corresponding top plate defines a second notch, each second notch communicates with a top end of a corresponding one of the second through holes, and the latches respectively slide down along sidewalls bounding the second notches to enter the second through holes.
